Europäisches Patentamt

European Patent Office

Office européen des brevets

(11) Numéro de publication:

**0 307 299**
**A2**

## (12) DEMANDE DE BREVET EUROPEEN

(21) Numéro de dépôt: 88402227.8

(22) Date de dépôt: 05.09.88

(51) Int. Cl.⁴: **G 01 N 25/18**
**F 28 D 20/00**

(30) Priorité: 07.09.87 FR 8712390

(43) Date de publication de la demande:
15.03.89 Bulletin 89/11

(84) Etats contractants désignés:
AT BE CH DE GB IT LI LU NL SE

(71) Demandeur: **SOCIETE NATIONALE ELF AQUITAINE**
Société anonyme dite
**Tour Elf 2, Place de la Coupole La Défense 6**
**F-92400 Courbevoie (FR)**

(72) Inventeur: **Oms, Jean-Luc**
**El Romaguer**
**F-66740 Villelongue dels Monts (FR)**

**Prosdocimi, Jacques**
**12, rue des Micocouliers**
**F-66300 Canohes (FR)**

**Comtat, Maurice**
**Résidence du Midi Impasse Delfont No.7**
**F-31000 Toulouse (FR)**

(74) Mandataire: **Boillot, Marc**
**SOCIETE NATIONALE ELF AQUITAINE Division**
**Propriété Industrielle Tour Elf**
**F-92078 Paris la Défense Cédex 45 (FR)**

(54) **Procédé d'utilisation d'une sonde à choc thermique, sonde et application du procédé.**

(57) La présente invention concerne un procédé d'utilisation d'une sonde à choc thermique, la sonde à choc thermique et l'application de ce procédé à la commande de pompe à chaleur. Le procédé d'utilisation d'une sonde à choc thermique constitué d'un thermocouple associé à un élément chauffant, est caractérisé en ce qu'elle est utilisée pour la surveillance dans un réacteur solide-gaz (1, 2) de la réaction chimique entre un mélange poreux et un gaz par application d'une variation de flux de chaleur et traitement de la réponse du thermocouple.

EP 0 307 299 A2

**Description**

**PROCEDE D'UTLISATION D'UNE SONDE A CHOC THERMIQUE, SONDE ET APPLICATION DU PROCEDE**

La présente invention concerne un procédé d'utilisation d'une sonde à choc thermique, une sonde à choc thermique utilisable dans le procédé et l'application de ce procédé à la commande et au contrôle de pompes à chaleur chimiques.

Il est connu, par la demande de brevet FR 85 19137 d'utiliser une sonde à choc thermique constituée d'un thermocouple associé avec un élément chauffant pour mesurer la conductivité thermique et la capacité calorifique locale de matériaux soumis à des conditions thermiques et hydriques quelconques. Cette utilisation est prévue en particulier pour l'étude des matériaux de construction, consolidés ou non et constitués de solides poreux granulaires pouvant subir des humidités variables.

Un premier but de l'invention est de proposer un procédé d'utilisation d'une sonde à choc thermique dans des applications autres que la simple mesure des caractéristiques thermiques des matériaux.

Ce but est atteint par le fait que le procédé d'utilisation d'une sonde à choc thermique, constitué d'un thermocouple associé à un élément chauffant, est caractérisé en ce que la sonde est utilisée pour la surveillance dans un réacteur solide-gaz de la réaction chimique entre un mélange poreux et un gaz par application d'une variation de flux de chaleur et traitement de la réponse du thermocouple.

Un deuxième but de l'invention est de proposer une utilisation qui permette d'avoir un temps de réponse minimal dans les applications à un réacteur solide-gaz.

Ce deuxième but est atteint par le fait que le procédé d'utilisation est caractérisé en ce que l'application de la variation de flux de chaleur est constituée par une impulsion thermique obtenue par un générateur de courant alimentant la résistance chauffante, lorsque le solide du réacteur est un mélange de sel et d'un liant inerte, par exemple du graphite expansé et le traitement est constitué par une intégration de la courbe de réponse du thermocouple.

Un autre but est de proposer un procédé d'utilisation pour des réacteurs autres que ceux utilisant un tel mélange.

Ce but est atteint par le fait que le procédé d'utilisation est caractérisé en ce que la variation de flux de chaleur est constituée par un échelon thermique obtenu par l'alimentation de la résistance chauffante à l'aide d'un générateur de courant générant un échelon de courant et le traitement est constitué par la détection d'un niveau de température à un temps donné.

Un autre but de l'invention est de proposer un procédé d'utilisation applicable quelle que soit la structure du réacteur et permettant de mesurer une hétérogénéité dans le réacteur.

Ce but est atteint par le fait que le procédé d'utilisation est caractérisé en ce que plusieurs sondes sont disposées radialement dans un réacteur à structure, par exemple, modulaire sandwich, à plateau, ou sont disposées selon des directions parallèles à un axe de symétrie de la structure du réacteur, pour des réacteurs ayant une autre structure.

Un autre but de l'invention est de proposer une sonde à choc thermique particulièrement bien adaptée au procédé d'utilisation dans un réacteur.

Ce but est atteint par le fait que la sonde à choc thermique, comportant un tube cylindrique creux, est fermée à une extrémité, une résistance chauffante parcourant tout le tube, est caractérisée en ce que le tube est en acier inoxydable, la résistance chauffante est isolée du tube par de la magnésie et en ce qu'au moins un thermocouple est disposé à proximité du tube.

Selon une autre caractéristique, le thermocouple est soudé sur le tube.

Un autre but de l'invention est de proposer une application du procédé d'utilisation d'une sonde à choc thermique pour la commande et le contrôle des pompes à chaleur chimiques.

Ce but est atteint par le fait que la pompe à chaleur chimique est composée de un ou plusieurs réacteurs solide-gaz incorporant chacun au moins une sonde thermique et par le fait que les signaux délivrés par le thermocouple sont utilisés pour commander et contrôler le fonctionnement de la pompe à chaleur.

Selon une autre caractéristique, les signaux du thermocouple sont utilisés pour commander l'arrêt d'une étape de stockage ou d'une étape de déstockage.

Selon une dernière caractéristique, les signaux du thermocouple sont utilisés pour commander l'inversion du fonctionnement des réacteurs.

D'autres caractéristiques et avantages de la présente invention apparaîtront plus clairement à la lecture de la description ci-après faite en référence aux dessins annexés dans lesquels :

- la figure 1 représente schématiquement une pompe à chaleur constituée de réacteurs solide-gaz pendant la phase de production de chaleur,

- la figure 2 représente schématiquement la même pompe pendant la phase de re-génération,

- la figure 3 représente en coupe une structure de réacteur modulaire à plateau,

- la figure 4 représente une vue en coupe d'une sonde à choc thermique selon l'invention,

- la figure 5 représente une vue de dessus en coupe d'un réacteur à plateau,

- la figure 6 représente une vue en coupe d'une autre structure de réacteur solide-gaz,

- la figure 7 représente un diagramme de réponse de la sonde au cours du fonctionnement d'un réacteur,

- les figures 8 représentent des diagrammes de réponse de la sonde au cours du fonctionnement d'un réacteur solide-gaz.

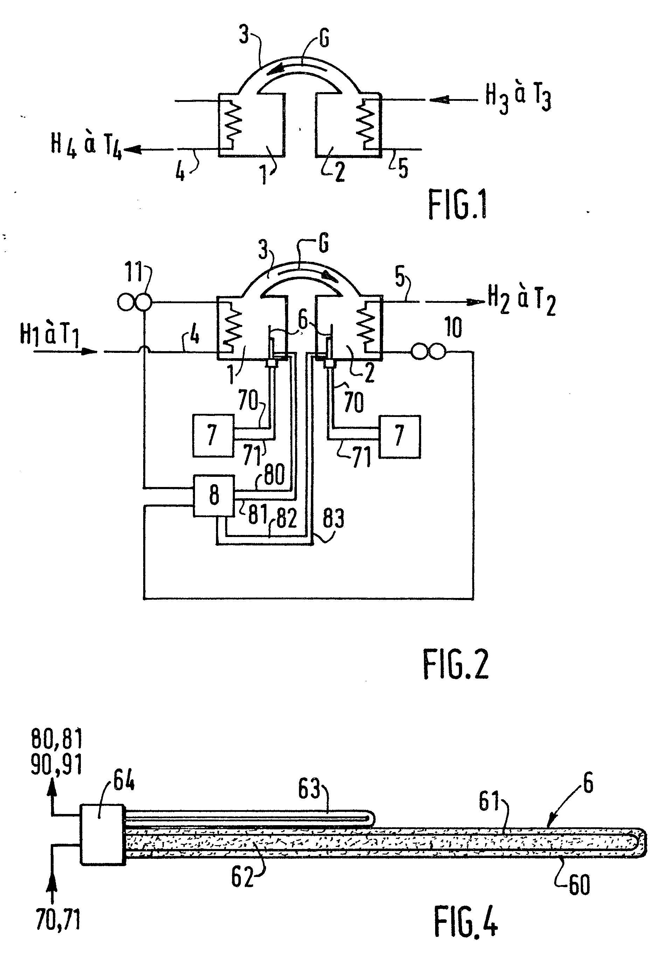

On a représenté sur la figure l, de manière schématique, une pompe à chaleur pendant la phase de déstockage de l'énergie, sur la figure 2 la même pompe pendant la phase de stockage.

La pompe à chaleur comporte deux réacteurs solide-gaz (1, 2) relié entre eux par une tubulure (3) dans laquelle circule le gaz. Le solide peut être, par exemple, un mélange sel-graphite expansé avec comme sel le chlorure de calcium CaCl$_2$ et le gaz, par exemple, de la méthylamine. Chaque réacteur est muni d'au moins un échangeur de chaleur (4, 5) permettant l'échange de calories entre le milieu réactionnel et les sources extérieures de calories.

Le dispositif fonctionne de la manière suivante : Dans une étape de régénération, on fournit des calories H 1 à la température Tl au réacteur (1). Une réaction chimique dans le réacteur solide-gaz (1) produit du gaz (G) à la pression (Pl). Ce gaz est introduit dans le réacteur (2) par la tubulure (3) à la même pression. Il se produit alors dans le réacteur (2) une réaction à une température (T2) qui fournit les calories H 2.

Lors d'une étape de fourniture de chaleur, on fournit des calories H 3 à une température (T3). La réaction a lieu dans le sens de production du gaz à la pression (P3) dans le réacteur (2). Lors du passage du gaz dans le réacteur (1), celui-ci réagit dans le sens exothermique de façon à fournir les calories H 4 à la température (T4).

Le problème qui se pose dans ces pompes à chaleur chimiques de rendement élevé est de connaître l'avancement de la réaction gaz solide pour permettre de contrôler et de commander une telle pompe à chaleur chimique. La solution utilisée doit permettre un domaine de variation important permettant de déterminer l'avancement de la réaction avec une bonne précision. Par ailleurs, la mesure doit pouvoir être réalisée in situ dans un délai court devant le temps de réaction du réacteur sans pour autant perturber le fonctionnement du système.

La solution a été apportée par l'utilisation de la sonde à choc thermique représentée à la figure 4. Cette sonde (6) est constituée d'un tube (60) en acier inoxydable pour résister à la corrosion du mélange sel-graphite et du gaz. Le tube (60) est cylindrique et fermé à une extrémité. Dans ce tube, on dispose un filament chauffant (61) lequel est relié par ses deux extrémités aux fils (70, 71) d'amenée d'une alimentation en courant, représentée à la figure 2 par la référence (7). L'ensemble de l'élément chauffant (61) est isolé du tube (60) par de la magnésie (62) placée à l'intérieur du tube.

Selon un mode préféré de l'invention, un thermocouple (63) est soudé sur la face externe du tube chauffant (60). Ce thermocouple est relié par les fils (80, 81) à un circuit d'enregistrement des signaux et de traitement des signaux.

Dans une variante non représentée de la sonde thermique, le thermocouple peut être placé à une distance déterminée du tube chauffant et rendu solidaire de ce tube uniquement par le bouchon isolant (64). Dans cette variante, on pourra disposer plusieurs thermocouples dans un volume autour du tube chauffant.

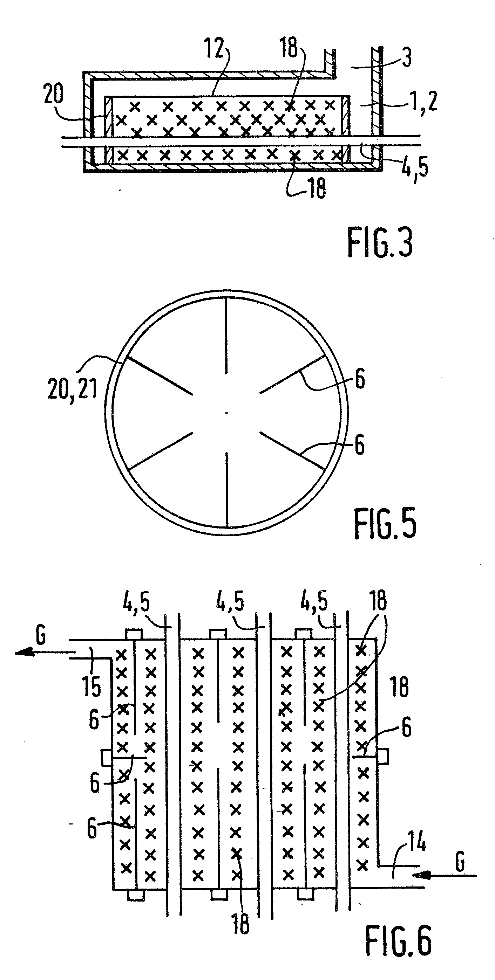

L'utilisation d'une telle sonde à choc thermique peut être réalisée dans des réacteurs à structure modulaire à plateau, tels que représentés schématiquement à la figure 3 et à la figure 5. Dans un réacteur de ce type, le gaz arrive par l'orifice (3) dans une enceinte (12). Dans cette enceinte (12), est placé un échangeur (4, 5) sur lequel repose une jupe (20) cylindrique dans laquelle on dispose, comme solide, un mélange sel-graphex (18). Sous l'échangeur (4, 5), on disposera également dans des jupes modulaires (21) le même mélange poreux (18) sel-graphite expansé. Un tel réacteur pourra avoir, de façon connue, une succession d'étages d'échangeurs de chaleur et de couches de solide. Pour plus de détails sur ces réacteurs, on pourra se référer à la demande de brevet français déposée le même jour au nom de S.N.E.A. et intitulée "Réacteur solide-gaz en lit fixe et utilisation de ce réacteur dans les pompes à chaleur thermochimiques". Une pluralité de sondes à choc thermique (6) sont disposées radialement (figure 5) à l'intérieur de la jupe (20) ou de la jupe (21) entourant les échangeurs.

De même, dans l'utilisation avec des réacteurs tels que celui représenté à la figure 6, constitué d'une enceinte cylindrique dans laquelle on place plusieurs tubes (4, 5) de circulation du fluide caloporteur, parallèlement à l'axe de symétrie de l'enceinte, cette enceinte étant remplie d'un mélange sel-graphite expansé (18) et alimentée à travers un orifice (14) par un gaz à une pression déterminée qui est évacué à travers l'orifice (15). Dans une enceinte de ce type, on pourra disposer les sondes (6) parallèlement à l'axe de symétrie de l'enceinte et à l'axe de symétrie des éléments échangeurs. D'autres sondes situées dans la partie médiane de l'enceinte pourront être également disposées radialement, comme représenté à la figure 6. L'utilisation de plusieurs sondes réparties selon les exemples des figures 5 ou 6 dans la structure du réacteur permet de mesurer des hétérogénéïtés du mélange dans le réacteur.

Le dispositif nécessaire à la mise en oeuvre du procédé d'utilisation de la sonde à choc thermique et son application à la commande de pompe à chaleur est représenté à la figure 2. Dans chacun des réacteurs (1, 2), on placera au moins une sonde à choc thermique telle que celle que l'on vient de décrire, cette sonde étant alimentée par un générateur (7) de courant électrique permettant de créer le flux de chaleur nécessaire à la mesure. Ce générateur de courant électrique générera soit un échelon, soit une impulsion de courant. Les signaux de réponse du thermocouple placé dans le réacteur (1) sont transmis par les fils (80,81) à un circuit (8) de traitement de signaux. De même, la réponse du thermocouple (6) placé dans le deuxième réacteur (2) sera envoyée par les fils (82, 83) vers ce circuit (8) de traitement des signaux des thermocouples. Ce circuit (8) permettra, par exemple, de commander les électrovannes (11,10) pour, soit arrêter une phase de production ou régénération de chaleur, soit inverser le cycle de fonctionnement des réacteurs en les faisant passer d'une phase à l'autre.

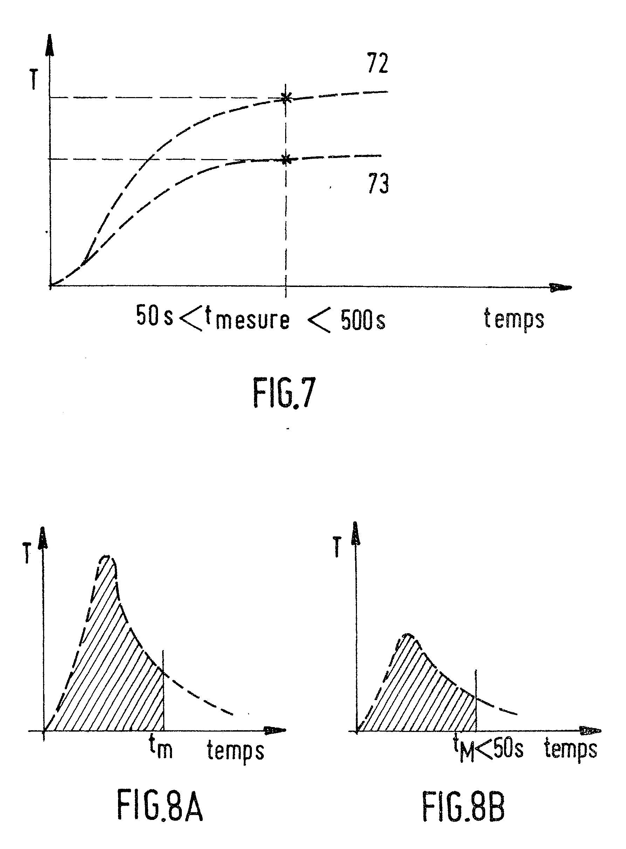

Cette utilisation d'une sonde thermique pour une telle commande a été rendue possible par la constatation que la réponse du thermocouple à une excitation thermique était représentative de l'avancement de la réaction dans le réacteur. Un étalonnage effectué in situ du capteur autorise une corrélation directe entre le signal analysé et la composition du mélange réactionnel. Ainsi, la figure 7 représente les courbes de réponse du thermocouple en fonction de l'évolution de la réaction lorsque l'on a envoyé dans le capteur une excitation thermique correspondant à un échelon de courant. La courbe (72) indique, par exemple, un état initial du réacteur tandis que la courbe (73) indique une composition correspondant à un mélange réactionnel différent. De cette façon, la détection du niveau de température à un temps donné compris dans un intervalle de 50 à 500 secondes sera suffisante pour analyser l'évolution de la réaction et contrôler celle-ci en commandant la pompe à chaleur.

De même lorsque l'on veut travailler avec un temps de mesure plus court, pour commander le système, l'analyse de la réponse du milieu à une impulsion thermique sera effectuée par intégration de la courbe de réponse du thermocouple. Ce procédé permet de passer à des temps de mesure inférieurs à 50 secondes. La variation de surface entre les figures 8A et 8B représente l'évolution de la réaction. Ainsi, la figure 8A correspond à un sel déchargé tandis que la figure 8B correspond au sel chargé.

Enfin, un tel procédé d'utilisation de sonde à choc thermique est particulièrement bien adapté dans le cadre des réacteurs solide-gaz mis en oeuvre dans les pompes à chaleur car ces derniers provoquent un gonflement du sel lors de la première absorption de gaz. Ce gonflement de sel permet d'éliminer, voire de négliger la résistance thermique de contact sonde-solide. Cette résistance thermique est bien souvent un des principaux obstacles de l'utilisation de ce type de sondes dans d'autres applications. Par ailleurs, un tel procédé d'utilisation de sonde à choc thermique présente des avantages par rapport à d'autres procédés classiques tels que l'utilisation d'un débitmètre massique ou une mesure de gaz condensé. En effet, dans le cas d'un débitmètre massique, l'utilisation est délicate, notamment dans le cas de gaz condensable provoquant des condensations parasites et des bouchages.

D'autres modifications à la portée de l'homme de métier font également partie de l'esprit de l'invention.

## Revendications

1 - Procédé d'utilisation d'une sonde à choc thermique constituée d'un thermocouple associé à un élément chauffant, caractérisé en ce qu'elle est utilisée pour la surveillance dans un réacteur solide-gaz (1, 2) de la réaction chimique entre un mélange poreux et un gaz par application d'une variation de flux de chaleur et traitement de la réponse du thermocouple.

2 - Procédé d'utilisation selon la revendication I, caractérisé en ce que l'application de la variation est constituée par une impulsion thermique obtenue par un générateur de courant (7) alimentant la résistance chauffante (61) pour obtenir des temps de réponse courts et le traitement est constitué par une intégration de la courbe de réponse du thermocouple.

3 - Procédé d'utilisation selon la revendication I, caractérisé en ce que l'application de la variation de chaleur est constituée par un échelon thermique obtenu par un générateur de courant (7) alimentant la résistance chauffante (61) avec un échelon de courant et le traitement est constitué par la détection d'un niveau de température à un temps donné.

4 - Procédé d'utilisation selon une des revendications précédentes, caractérisé en ce que plusieurs sondes sont disposées radialement.

5 - Procédé d'utilisation selon la revendication 4, caractérisé en ce que les sondes sont disposées dans un réacteur à structure modulaire sandwich, à plateau.

6 - Procédé d'utilisation selon une des revendications 1 à 3, caractérisé en ce que les sondes sont disposées selon un axe de symétrie de la structure du réacteur.

7 - Sonde à choc thermique comportant un tube cylindrique creux (60) et fermé à une extrémité, une résistance chauffante (61) parcourant tout le tube, caractérisée en ce que le tube est en acier inoxydable, la résistance chauffante (61) est isolée du tube (60) par de la magnésie (62) et en ce que au moins un thermocouple (63) est disposé à proximité du tube.

8 - Sonde à choc thermique selon la revendication 7, caractérisée en ce que le thermocouple est soudé sur le tube.

9 - Application du procédé d'utilisation d'une sonde à choc thermique selon une des revendications précédentes pour commander et contrôler des pompes à chaleur chimique, caractérisée en ce que la pompe à chaleur chimique est composée de un ou plusieurs réacteurs (1, 2) solide-gaz incorporant chacun au moins une sonde à choc thermique (6) et en ce que les signaux délivrés par le thermocouple (63) de chaque sonde sont utilisés pour commander et contrôler le fonctionnement de la pompe à chaleur.

10 - Application selon la revendication 9, caractérisée en ce que les signaux sont utilisés pour commander l'arrêt d'une étape de stockage ou d'une étape de déstockage.

11 - Application selon la revendication 9, caractérisée en ce que les signaux sont utilisés pour commander l'inversion du fonctionnement des réacteurs.

3 G

$H_3$ à $T_3$

$H_4$ à $T_4$

4 1 2 5

FIG.1

11 3 G 5

$H_2$ à $T_2$

$H_1$ à $T_1$ 4 6 10

1 2

70 70

7 71 71 7

80

8

81 82 83

FIG.2

80,81
90,91

64 63 61 6

62 60

70,71

FIG.4

**FIG.3**

**FIG.5**

**FIG.6**

FIG.7

FIG.8A

FIG.8B